# EUROPEAN PATENT SPECIFICATION

(11) **EP 3 125 348 B1**
(45) Date of publication and mention of the grant of the patent: **07.11.2018**
(21) Application number: 15183943.8
(22) Date of filing: 04.09.2015
(51) Int. Cl.: H01M 8/0606, C01C 1/08, C12M 1/40, H01M 8/04302, H01M 8/04303, C01B 3/04, H01M 8/124, H01M 8/2495, H01M 8/04007

(54) **VEHICLE SYSTEM COMPRISING A FUEL CELL**
FAHRZEUGSYSTEM MIT EINER BRENNSTOFFZELLE
SYSTÈME DE VÉHICULE COMPRENANT UNE PILE À COMBUSTIBLE

(30) Priority: 31.07.2015 EP 15306250
(43) Date of publication of application: 01.02.2017
(73) Proprietor: Plastic Omnium Advanced Innovation and Research, 1120 Bruxelles (BE)
(72) Inventor: VAN SCHAFTINGEN, Jules-Joseph, 1300 WAVRE (BE); DOUGNIER, François, 3191 HEVER (BE); MONGE-BONINI, Beatriz, 1040 BRUXELLES (BE); DE MAN, Pierre, 1090 BRUXELLES (BE)
(74) Representative: Remy, Vincent Noel Paul

(56) References cited:
- WO-A2-2005/108289
- US-A1- 2003 219 371
- DEKKER N J J ET AL: "Highly efficient conversion of ammonia in electricity by solid oxide fuel cells", 6TH EUROPEAN SOLID OXIDE FUEL CELL FORUM,, 1 January 2004 (2004-01-01), pages 1524-1534, XP009102269,

## Description

### Field of Invention

The invention relates to a system comprising a fuel cell, preferably a solid oxide fuel cell, for mounting on-board a vehicle.

### Background

Vehicles such as cars comprise a fuel cell for producing electricity through the oxidation of a fuel. Such fuel cells include solid oxide fuel cells (SOFC). A SOFC is an electrochemical device that can be used to produce electricity through the oxidation of a fuel. SOFCs are known for their high efficiency and are able to generate electrical power from a wide range of fuels.
A SOFC comprises an anode, a cathode and an electrolyte located between the anode and the cathode. For a SOFC, the electrolyte is a solid ceramic material. When a SOFC is in operation, oxygen ions flow from the cathode to the anode through the solid electrolyte material. When these oxygen ions reach the anode, they can be used to oxidise the fuel.
Generally, multiple SOFCs are connected in series to form a "SOFC stack".
Fuel cells can use many different types of fuel. For example, because of the high temperatures required by an SOFC, a SOFC can use light hydrocarbons such as methane, propane and butane as a fuel. In addition, fuel cells such as SOFCs can also use ammonia. The use of ammonia as a fuel is thought to be advantageous as it is a zero CO₂-emissions fuel and, as it does not contain any carbon, there can be no coking of the anode. However, due to its gaseous nature in ambient conditions and its toxicity, ammonia is not convenient to store, especially in a vehicle.

WO2005108289 describes such a vehicle system comprising an SOFC, a container for the storage of ammonia precursor and a fuel generator. In order to address this problem, the solid storage of ammonia in salt form has been considered. However, as large amounts of salt are required and the salt store needs to be replenished relatively frequently, the storage of solid ammonia salt has some disadvantages. Therefore, instead of storing ammonia, vehicle systems often store an ammonia precursor such as urea which can be converted into ammonia. Conversion of the stored urea to ammonia can be performed by thermal degradation (for example, by applying a temperature of 120°C at a pressure of 3 atmospheres), by using catalysts such as vanadium pentoxide (at a temperature of 100°C, for example), or by using an enzyme such as urease (at around 60°C).

As SOFCs comprise a ceramic material, they operate at high temperatures, typically between 500 and 1000°C. As a result, the start-up time of a SOFC is relatively long, for example, around 10 minutes. This long start-up time is not compatible with the start-up time required for personal vehicles.

In addition, as a high temperature needs to be reached before the SOFC can operate, a large amount of energy is required to heat up the SOFC. Typically, for a small personal vehicle (small passenger car), around 1 kWh is required to bring the SOFC to the required temperature, corresponding to a power of 6 kW during a 10 minute start-up period. Obviously, larger vehicles would require even more energy to heat up the SOFC.

It is, therefore, an object of the present invention to reduce the start-up time of a vehicle system comprising a fuel cell such as a SOFC.

Generally, high capacity batteries are required to heat a fuel cell such as a SOFC to the operating temperature. However, it is generally desirable to avoid the need for a high capacity battery in a vehicle due to the high weights and costs associated with such batteries.

Therefore, it is an object of the present invention to reduce power demand during start-up of a system comprising a fuel cell. In particular, it is an object of the invention to reduce the electrical power demand during start-up so as to be able to reduce size of the batteries that need to be carried on board the vehicle.

Furthermore, when a fuel cell such as a SOFC is shut down, there is a loss of energy as the fuel cell cools down from the operating temperature. It is, therefore, another object of the present invention to harness the energy presently lost on shut down of a fuel cell and so reduce the energy waste.

According to a first aspect of the invention there is provided a vehicle system comprising:
- a fuel cell,
- at least one container for the storage of ammonia precursor, and
- a first and second fuel generator, wherein the first and second fuel generators are configured to convert the ammonia precursor into fuel for use in the fuel cell, and wherein the first fuel generator is configured to carry out the ammonia precursor conversion within a lower temperature range than the second fuel generator.

The vehicle system of the present invention is a system suitable for mounting on-board a vehicle such as a car.

According to a first aspect of the invention, there is a system comprising a first fuel generator and a second fuel generator configured to operate at different temperatures. Specifically, the first fuel generator is able to convert the ammonia precursor to fuel at lower temperatures than the second fuel generator.

The present invention, therefore, provides a first fuel generator configured to convert the ammonia precursor into fuel in a first temperate range, and a second fuel generator configured to convert the ammonia precursor into fuel in a second temperature range, where said second temperature range is higher than the first temperature range.

In providing different fuel generators that are able to convert ammonia precursor into fuel at different temperatures, the system of the first aspect of the present invention is able to produce fuel for use in the fuel cell over a greater total range of temperatures.

For example, whilst the vehicle system and fuel cell is warming up, the system is able to use the first lower temperature generator to produce fuel. Then, when the vehicle system and fuel cell has reached a higher temperature, it will be possible to use the higher temperature generator to produce fuel.

Similarly, whilst the system and the fuel cell is cooling down after shut down of the fuel cell, the system is firstly able to use the second higher temperature fuel generator to produce fuel whilst the temperature of the system is still relatively high. However, at a certain point, the system will get too cold for the second higher temperature fuel generator to operate. The lower temperature generator can then be used to produce fuel.

Fuel produced by the first and/or second fuel generator whilst the fuel cell is not operating (i.e. whilst the fuel cell is not oxidising fuel to produce energy), may either be sent to the fuel cell so that it is available for oxidation as soon as the fuel cell reaches its operational temperature, or it may be stored in a buffer tank for later use by the fuel cell. As there is fuel available for use as soon as the fuel cell reaches temperature, the first aspect of the present invention may reduce the start-up time of the system and may help to reduce the power demand during start-up.

The at least one container for the storage of ammonia precursor may be configured to hold ammonia precursor in solid or liquid form (for example, as a solution of the ammonia precursor). The system may comprise a single container for the storage of ammonia precursor, where this container is connected to both the first fuel generator and the second fuel generator. Alternatively (or additionally), each of the first and second fuel generators may be provided with their own container for the storage of ammonia precursor.

In an exemplary embodiment, the ammonia precursor is urea. In such embodiments, the container(s) may be configured to hold at least a solution of the urea.

In some embodiments the first and second fuel generators are configured to convert the ammonia precursor into the same fuel. However, in other embodiments, the first and second fuel generators may convert the ammonia precursor into different types of fuel.

For example, both the first fuel generator and the second fuel generator may convert the ammonia precursor into a mixture comprising ammonia as the fuel source. However, in an alternative embodiment, the first fuel generator may convert the ammonia precursor into a mixture containing ammonia, whereas the second fuel generator may convert the ammonia precursor into a mixture comprising hydrogen as the fuel source. At least partially converting ammonia into hydrogen may be advantageous as this produces a mixture that is easier to oxidize and so allows heat to be generated more readily.

In embodiments in which the second fuel generator forms hydrogen by at least partially decomposing ammonia formed from the precursor, the mixture sent to the fuel cell may still comprise a mixture of ammonia and hydrogen.

In embodiments of the invention, the first and second fuel generators may be any means suitable for generating a fuel for use in the fuel cell. For example, the fuel generator may use a catalyst to generate the fuel, and this catalyst may be a non-biological or a biological catalyst.

In some embodiments, the first fuel generator comprises a catalyst suitable for decomposing the ammonia precursor into ammonia, wherein the catalyst is preferably a biological catalyst, preferably urease. If the first fuel generator uses urease to generate ammonia, the first fuel generator may be operational (i.e. able to convert the precursor to fuel) at temperatures between 40 and 80°C, more preferentially between 40 and 60°C.

In an embodiment of the first aspect of the invention, the second fuel generator may comprise a catalyst suitable for decomposing the ammonia precursor into ammonia, wherein the catalyst may be vanadium pentoxide.

Some embodiments of the vehicle system of the present invention could also comprise more than two fuel generators. For example, the system could be provided with a third fuel generator which is adapted to work in a different temperature range from the first and second fuel generators.

Vehicle systems according to the first aspect of the invention may further comprise at least one hydrogen generator. If the system comprises a hydrogen generator, this hydrogen generator is configured to at least partially decompose ammonia formed from the ammonia precursor into hydrogen.

In embodiments of the invention, the vehicle system may also comprise:
- a fuel cell,
- at least one container for the storage of ammonia precursor,
- a first and second fuel generator, wherein the first and second fuel generators are configured to convert the ammonia precursor into fuel for use in the fuel cell, and wherein the first fuel generator is configured to carry out the ammonia precursor conversion within a lower temperature range than the second fuel generator, and
- a controller, wherein the controller is configured to control the operation of at least one of the first fuel generator and the second fuel generator as a function of a temperature of the vehicle system.

The controller is any form of control module that can control the operation of at least one of the first fuel generator and the second fuel generator. For example, the controller can be configured to turn on and/or off at least one of the first fuel generator and/or the second fuel generator in response to a temperature of the vehicle system or to information relative to a temperature of the vehicle system.

In some embodiments, the vehicle system may further comprise a temperature sensor configured to measure a temperature of the vehicle system, wherein the controller is configured to control the operation of at least one of the first fuel generator and the second fuel generator as a function of the temperature measured by the temperature sensor.

In alternative embodiments, the temperature of the vehicle system can be estimated. For example, the system may comprise a timing device such as clock or stop watch. This timing device could be used to measure the time lapsed since the start-up of the system. Then, the controller can compare the measured time to a look up table (or a model) in order to determine the temperature of the vehicle system. Thus, the controller can use this information to control at least one of the fuel generators. In this way, the controller could control at least one of the first and second fuel generators as a function of a temperature of the vehicle system without directly carrying out any temperature measurements.

In one embodiment of the invention, when the temperature measured by the temperature sensor is below a first predetermined temperature, the controller may be configured to activate the first fuel generator to generate fuel, and wherein when the temperature measured by the temperature sensor is equal to or above a second predetermined temperature, the controller may be configured to activate the second fuel generator to generate fuel.

In some embodiments of the invention, the first and second temperatures may be the same temperature. In other words, the controller can use a single predetermined temperature threshold. In such embodiments, when the temperature detected is below the predetermined threshold temperature, the controller is configured to allow the first fuel generator to operate. Then, when the temperature detected by the temperature sensor crosses this predetermined threshold temperature, the controller is configured to shut down the first fuel generator and allow the second fuel generator to operate (for example, by turning on the second fuel generator).

An example of a threshold temperature may be between 50 and 250°C, for example, 180°C. In an embodiment where the threshold temperature is 180°C, when the measured temperature is below this value, the first fuel generator is allowed to operate. However, when the temperature reaches 180°C or higher, the controller may be configured to shut down (i.e. turn off) the first fuel generator to conserve components of the fuel generator (for example, a biological catalyst) and allow the second fuel generator to operate.

In alternative embodiments, the first and second temperature may be different temperatures. For example, when the temperature is below 150°C, the first fuel generator is allowed to operate. When this temperature is exceeded, the controller may be configured to shut down the first fuel generator. However, the controller may not be configured to turn on the second fuel generator until a higher temperature, for example, of 200°C is reached.

Alternatively the first temperature could be larger than the second temperature; for instance the first temperature could be 200°C and the second temperature 180°C, so that both fuel generators would run in parallel between 180 and 200°C.

In some embodiments, turning on the second fuel generator when possible is advantageous as this higher temperature generator may enable quicker and more efficient production of fuel that the first lower temperature generator.

In an advantageous embodiment, the temperature detected by the temperature sensor may be representative of the temperature of the solid oxide fuel cell. In this way, it can be readily determined when the solid oxide fuel cell is at its operating temperature. Also, if the temperature of the solid oxide fuel cell is known, then the controller may be configured to use this information to determine the temperature of other system components, for example, the temperature of the fuel generators.

In some embodiments, the system may comprise more than one temperature sensor, and the controller may be configured to control at least one of the first fuel generator and the second fuel generator as a function of the multiple temperatures detected.

In an exemplary embodiment of the invention, the fuel cell is a solid oxide fuel cell. However, in other embodiments, the vehicle system may comprise any other types of ammonia-based fuel cells.

In other exemplary embodiments, at least one of the first fuel generator and the second fuel generator may comprise a heat transfer means configured to transfer heat generated by the fuel cell to the fuel generator. In this way, the first and/or second fuel generator can use the heat generated by the fuel cell to power the fuel generator. For example, the fuel generator may use the heat generated by the fuel cell to decompose a precursor of the fuel into a fuel that can be used by the fuel generator.

In some embodiments of the invention, the vehicle system further comprises at least one buffer tank for storing fuel produced by at least one of the first fuel generator and the second fuel generator. In embodiments of the system comprising a controller, the controller is configured to direct the fuel produced by the fuel generator to the at least one buffer tank, and wherein the controller is also configured to direct fuel stored in the buffer tank to the fuel cell.

In an exemplary embodiment of the vehicle system of the present invention, the controller may be configured to direct fuel produced by at least one of the first fuel generator and the second fuel generator to the at least one buffer tank after the fuel cell has been turned off and is cooling down.

The buffer tank can be any form of unit, chamber or container that can hold fuel.

In some embodiments, the system may further comprise an additional fuel cell configured to generate electricity at a lower temperature than the fuel cell, and wherein the additional fuel cell is preferably an alkaline fuel cell.

According to a second aspect of the invention there is provided a vehicle system comprising:
- a fuel cell,
- a fuel generator, and
- a heat transfer means configured to transfer heat from the fuel cell to the fuel generator, wherein the fuel generator is configured to use the heat transferred from the fuel cell to generate fuel for use in the fuel cell.

This system enables waste heat energy generated by the fuel cell to be used by a fuel generator.

In an exemplary embodiment of the second aspect of the invention, the fuel cell is a solid oxide fuel cell.

In one embodiment of this second aspect of the invention, when the fuel cell is turned off and is cooling down from an operating temperature, the heat transfer means is configured to transfer heat energy produced by the fuel cell to a fuel generator whilst the fuel cell is cooling down. The system, therefore, recovers energy that would otherwise be lost during the cool down process.

In another embodiment of this second aspect of the invention, when the fuel cell is switched on and is warming up to an operating temperature, the heat transfer means is configured to transfer heat energy produced by the fuel cell to a fuel generator whilst the fuel cell is warming up to an operating temperature. Using the waste heat energy emitted by the fuel cell at this stage may allow fuel to be generated so that it is ready to be used by the fuel cell when it reaches its operating temperature.

Embodiments of the second aspect of the invention may also comprise a buffer tank and a controller, wherein the controller is configured to direct fuel produced by the fuel generator to the buffer tank, and to direct fuel stored in the buffer to the fuel cell.

In some embodiments of the second aspect of the invention, the heat transfer means is configured to recover at least 20% of the heat energy produced by the fuel cell, preferably at least 40%.

In embodiments of this second aspect of the invention, the fuel generator is any means suitable for generating a fuel for use in the fuel cell. For example, the fuel generator may be a means for generating this fuel from one or more other substances (such as a precursor of the fuel that can be decomposed into the fuel). The fuel generator may use a catalyst to generate the fuel, and this catalyst may be a non-biological or a biological catalyst.

In embodiments in which the fuel cell is configured to use ammonia fuel, the fuel generator may be a sub-system configured to generate ammonia from an ammonia precursor.

In addition, in some embodiments, the fuel generator of the second aspect of the invention may comprise two fuel generators, where a controller is configured to control these two fuel generators, the first and second fuel generators, as a function of the temperature of the system detected by a temperature sensor.

As with the first aspect of the invention, if the temperature detected by the temperature sensor is below a first temperature, the controller may be configured to use the first fuel generator to generate fuel. In addition, when the temperature detected by the temperature sensor is equal to or above a second temperature, the controller may be configured to use the second fuel generator to generate fuel.

As with the first aspect of the invention, the temperature sensor may be located at multiple possible points within the vehicle system. Embodiments of the second aspect may also comprise more than one temperature sensor.

In some embodiments of the second aspect of the invention, the vehicle system may also comprise an additional fuel cell. This additional fuel cell may be configured to generate electricity at a lower temperature than the other fuel cell. The additional fuel cell may be an alkaline fuel cell.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a diagram illustrating an embodiment of a vehicle system according to the present invention;
Figure 2 is a diagram illustrating another embodiment of a vehicle system according to the invention;
Figure 3 also shows an embodiment of a vehicle system according to the invention;
Figure 4 illustrates a further embodiment of a vehicle system according to the invention.

### Description of embodiments

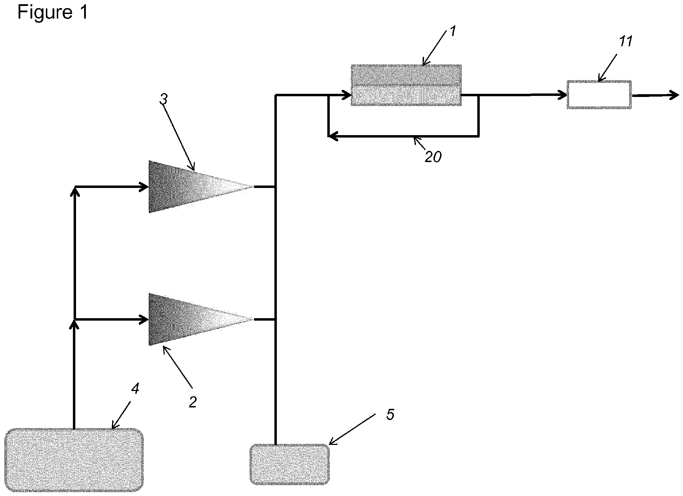

Figures 1 to 4 illustrate embodiments of a vehicle system according to the present invention. These embodiments all comprise a fuel cell 1, a first fuel generator 2, a second fuel generator 3, a container 4 for holding an ammonia precursor and a buffer tank 5 for collecting effluents produced by the first fuel generator 2 and/or the second fuel generator 3.

In the embodiments of Figures 1 to 4, the fuel cell 1 is preferably a solid oxide fuel cell (SOFC). Therefore, in the following description, the fuel cell will be described as being a solid oxide fuel cell 1. However, it would be possible to use other fuel cells in these embodiments.

The container 4 for holding an ammonia precursor may be any form of tank suitable for storing an ammonia precursor. Preferably, the container 4 is configured to hold a solution of an ammonia precursor, most preferably a urea solution such as AdBlue® (also known as diesel exhaust fluid, DEF). If the container 4 is configured to hold AdBlue® or another urea solution, in some embodiments, this solution may be boosted with extra urea before it is added to the container 4.

In all of the illustrated embodiments, a single container 4 for the ammonia precursor is connected to both the first fuel generator 2 and the second fuel generator 3. The first fuel generator 2 and the second fuel generator 3 are able to generate ammonia from the ammonia precursor held in the container 4. The generated ammonia can then be fed to the solid oxide fuel cell 1 where it can be oxidised to generate electricity.

In the illustrated embodiments, the second fuel generator 3 is configured to operate at higher temperatures than the first fuel generator 2 (i.e. the first fuel generator 2 is configured to operate at lower temperatures than the second fuel generator 3). For example, the second fuel generator 3 may be configured to operate at temperatures above 80°C, such as temperatures around 200°C. In contrast, the first fuel generator 2 is configured to operate at lower temperatures, for example, below 80°C.

A first fuel generator 2 will be particularly well adapted to operate at temperatures below 80°C if the fuel generator contains a biological catalyst such as urease

The second fuel generator 3 may contain a catalyst such as vanadium pentoxide. Alternatively the conversion of the ammonia precursor to ammonia in the second fuel generator may be performed by thermal degradation.

Effluents from both fuel generators 2, 3 may be directed to the solid oxide fuel cell 1 or to an ammonia effluents buffer tank 5.

The system illustrated in the figures may also be provided with a controller (not shown) for controlling the flow of the effluents generated by the first fuel generator 2 and/or the second fuel generator 3.

Furthermore, the system shown in the figures may additionally comprise a temperature sensor (not shown) configured to measure a temperature of the vehicle system. The controller may then be configured to control at least one of the first fuel generator 2 and the second fuel generator 3 as a function of this measured temperature.

The temperature sensor may measure the temperature of the first fuel generator 2 or the second fuel generator 3. The temperature sensor may alternatively be configured to measure the temperature in a line (for example, a conduit, tube or pipe) connecting a fuel generator to the solid oxide fuel cell 1. The temperature sensor may also measure the temperature of the solid oxide fuel cell 1 itself.
In some embodiments, the system may comprise multiple temperature sensors. In such embodiments, the controller may be configured to control one or more system components as a function of multiple measured temperatures.

In the systems of Figures 1 to 4, if the temperature detected by the temperature sensor is below a first temperature, the controller may be configured to use the first fuel generator 2 to generate fuel as this fuel generator is configured to operate at a lower temperature. Conversely, if the temperature detected by the temperature sensor is equal to or above a second temperature, the controller may be configured to use the second fuel generator 3 to generate fuel.

In the illustrated systems, at least some of the output of the solid oxide fuel cell 1 is sent to the exhaust system 11.

At start-up of the vehicle system shown in Figure 1, the solid oxide fuel cell 1 can be electrically heated using electrical heaters (not shown in the figures). For example, the means for heating may be an electrical resistive heating device powered by batteries carried on board the vehicle. The solid oxide fuel cell 1 needs to be heated to an operational temperature before it can be used to oxidise fuel.

The first fuel generator 2 can also be started on start-up. For example, if the solid oxide fuel 1 does not contain enough fuel to be able to operate when it reaches the required temperature, the effluents produced by the first fuel generator 2 may be sent to the solid oxide fuel cell 1. Therefore, on start-up of the vehicle, the controller may be configured to start the first fuel generator 2.

Once the solid oxide fuel cell 1 has enough ammonia for start-up, the first fuel generator 2 may continue to generate ammonia which is then sent to the ammonia effluents buffer tank 5 by the controller.

When an operating temperature of the solid oxide fuel cell 1 is reached, ammonia effluents may be sent directly from the first fuel generator 2, and/or from the second fuel generator 3, and/or from the ammonia effluents buffer tank 5 to the solid oxide fuel cell 1 where the ammonia will be oxidised.

In addition to sending ammonia to the solid oxide fuel cell 1, the system is also configured to provide the solid oxide fuel cell 1 with an oxidant. This oxidant is typically provided by supplying the solid oxide fuel cell with a flow of air. The fuel and/or oxidant directed to the solid oxide fuel cell 1 may be preheated before they reach the solid oxide fuel cell 1.

The heat generated by the solid oxide fuel cell 1 after it has been turned on may be used to heat up one or more of the first and second fuel generators 2, 3. Therefore, in some embodiments, the first and second fuel generators 2, 3 may comprise a heat transfer means configured to harness waste heat energy generated by the solid oxide fuel cell 1. For example, these heat transfer means may permit direct contact between the fuel generator 2, 3 and the solid oxide fuel cell, or the heat transfer means may be a heat exchanger.

In one embodiment, once the solid oxide fuel cell 1 has heated the second fuel generator 3 to an appropriate temperature (i.e. to a temperature at which it can operate), the second fuel generator 3 begins to operate and the first fuel generator 2 is shutdown by the controller. The shutdown of the first fuel generator 2 prevents catalysts such as urease from being used up as quickly. The heat generated by the solid oxide fuel cell 1 is then used by the second fuel generator 3 to decompose the ammonia precursor to ammonia fuel for use in the solid oxide fuel cell 1.

In some embodiments, the heating of the first fuel generator 2 and/or the second fuel generator 3 can be supplemented by heat provided by additional heating means such as an electrical resistive heating device. A means for regulating the heat (for example, a fan) may also be provided.

When the solid oxide fuel cell 1 is shut down, heat will still be emitted by the solid oxide fuel cell 1 as it cools down.

During this cool down, the second fuel generator 3 continues operating whilst the heat generated is sufficient to keep it at its operating temperature. In addition, the second fuel generator will continue to operate during cool down provided the ammonia effluents buffer tank 5 has space to contain the effluents generated by the fuel generator 3.

When the amount of heat emitted by the solid oxide fuel cell 1 is no longer sufficient to keep the second fuel generator 3 operating but there is an enough heat to reach the operating temperature of the first fuel generator 2, the controller will shut down the second fuel generator 3 and start up the first fuel generator 2. The first fuel generator 2 will then continue to decompose the ammonia precursor to ammonia until there is no longer enough heat to perform this process or until the buffer tank 5 is full of ammonia or until the amount of ammonia in the buffer tank 5 is above a threshold value.

In order to determine how much effluent is being stored in the buffer tank 5, the buffer tank 5 may be provided with some form of sensor, for example, a weight sensor or a device for sensing the level of the effluents in the buffer tank 5. The controller would then be configured to use the information provided by the buffer tank 5 sensor to control the operation of one or more of the fuel generators 2, 3.

In using the heat produced by the solid oxide fuel cell 1 whilst it is shutting down, less energy is wasted by the system. Instead, some of the energy lost as heat whilst the solid oxide fuel cell 1 shuts down can be recovered by harnessing the waste heat energy and using it to convert an ammonia precursor into ammonia.

In some embodiments, the ammonia effluents buffer tank 5 may be placed inside the urea solution tank 4.

As shown in Figure 1, a portion of the gases emitted by the solid oxide fuel cell 1 can be recycled and fed back to the solid oxide fuel cell 1 so as to increase the efficiency of the system. The recycling of the gases emitted by the solid oxide fuel cell is illustrated by line 20.

The part of the output from the solid oxide fuel cell 1 which is not recycled is directed towards the exhaust where it can be subjected to further processing. For example, ammonia that escapes from the solid oxide fuel cell can be combusted in the exhaust in a post-combustion step, or the ammonia could be catalytically oxidised. In addition, the heat of the gases emitted by the solid oxide fuel cell 1 can, in turn, be used to heat up the solid oxide fuel cell 1 and/or other parts of the system, for example, the first and second fuel generators 2, 3.

The gases emitted by the solid oxide fuel cell 1 can also be used in selective catalytic reduction (SCR) to eliminate or reduce the emission of nitrogen oxides.

The gases emitted by the solid oxide fuel cell 1, if they contain excessive amounts of nitrogen oxides can also be cleaned using for instance selective catalytic reduction.

As described above, in the embodiment of Figure 1, both the first and second fuel generators 2, 3 are used to generate fuel during the cooling down of the solid oxide fuel cell 1. For example, if 1 kWh of energy is stored as heat in the solid oxide fuel cell 1at shutdown, the system of Figure 1 could, for instance, recover 50% of this energy, i.e. the system could recover 0.5 kWh of energy. This is achieved by using both of the fuel generators 2, 3 to convert the ammonia precursor such as urea to ammonia which is then stored in the system. The stored ammonia is then able to be used directly in the solid oxide fuel cell 1 upon start-up, reducing the amount of energy that needs to be input into the system on start-up to generate ammonia fuel.

Converting the ammonia precursor to ammonia raises the energy level of the urea (2.5 kWh) to 3.0 kWh. Thanks to the fuel generators 2,3,3.0 kWh in the form of ammonia effluents are therefore made available for the next start-up and about 0.5 kWh electrical energy will be saved (from the energy needed to generate the ammonia effluents).

Preferably, the system illustrated by Figure 1 would be able to recover at least 20% of the energy lost from the solid oxide fuel cell 1 during shutdown, more preferably around 40%.

In an alternative embodiment, only a single fuel generator may be used to produce fuel during the cooling down process. For example, the fuel generator configured to be used at a lower temperature may be used. The use of the first fuel generator2 alone may achieve a similar performance to systems comprising two fuel generators but it will take more time to reach the same result and be more demanding on the enzymatic catalyst. Alternatively, only the fuel generator configured to be used at a higher temperature, the second fuel generator 3, may be used. However, use of the higher temperature fuel generator alone would reduce the amount of generated ammonia effluents as the conversion will stop once the solid oxide fuel cell 1 is not generating enough heat to keep the second fuel generator 3 at its operational temperature.

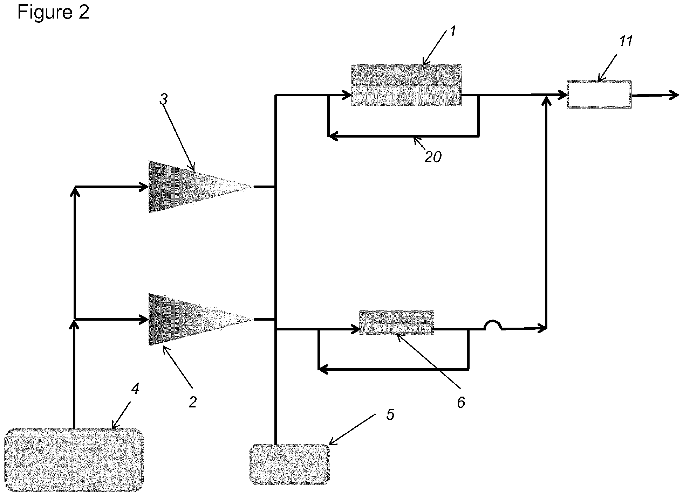

As the system illustrated by Figure 2 is substantially identical to that of Figure 1, this system operates in predominately the same way as the system of Figure 1.

The system of Figure 2 is different to that of Figure 1 as it additionally comprises a second fuel cell 6. This further fuel cell (a second fuel cell) 6 is configured to operate at lower temperature than the solid oxide fuel cell 1.

In some embodiments, the second fuel cell 6 may be an alkaline fuel cell (AFC). Alkaline fuel cells typically have very low heating requirements. For example, the alkaline fuel cell may be configured to operate at ambient temperature or slightly above ambient temperature (say <120°C).

At system start-up, the second fuel cell 6 can be put in operation much faster than the solid oxide fuel cell 1. During operation, the second fuel cell 6 may use the ammonia effluents stored in the buffer tank as fuel. Alternatively (or additionally), fuel for use in the second fuel cell 6 may be generated by the lower temperature first fuel generator 2. The second fuel cell 6 can then be used to generate electricity which can be used to heat-up the rest of the system (such as the solid oxide fuel cell 1, the second fuel generator 3) and/or support the electrical power demand from the motor(s) powering the vehicle.

The heat generated by the losses of the secondary fuel cell 6 can also be used to sustain the temperature of the lower temperature first fuel generator 2. For example, the first fuel generator 2 may be provided with a heat transfer means configured to transfer waste heat from the secondary fuel cell 6 to the first fuel generator 2.

When the solid oxide fuel cell 1 of the system of Figure 2 reaches its operating temperature, a controller (not shown) shuts down the second fuel cell 6. In addition, the first fuel generator 2, the fuel generator that is able to operate at a lower temperature may also be shut down at this point by the controller, and the controller may be configured to turn on the higher temperature second fuel generator 3.

When the solid oxide fuel cell 1 is shut down, the procedure is essentially same as described in relation to the system of Figure 1: the second fuel generator 3 continues operating as long as temperature allows (and provided there is room in the buffer tank 5 for the effluents formed). When the solid oxide fuel cell 1 no longer produces enough heat the keep the second fuel generator 3 at its operating temperature, the controller turns off this higher temperature second fuel generator 3 and turns on the first fuel generator 2. This is provided the temperature of the system is high enough to operate this lower temperature first fuel generator 2 and if there is enough room in the buffer tank 5 to store the effluents generated.

If needed, the second fuel cell 6 can be turned on during shut down of the solid oxide fuel cell 1 to charge up any electrical batteries in the system to ensure that the system is ready for start-up.

Considering for instance that 3.0 kWh of ammonia effluents have been generated by the fuel generators as described in relation to Figure 1, the alkaline fuel cell could generate 1.5 kWh of electrical energy at start-up. If the electrical power needed to move the vehicle in the first 10 minutes and first 20 minutes amounts to 2 kWh and 4 kWh respectively, this represents 75% and 37.5% of the electrical needs. This electrical energy will not have to be extracted from the electrical batteries, allowing thus these to be downsized.

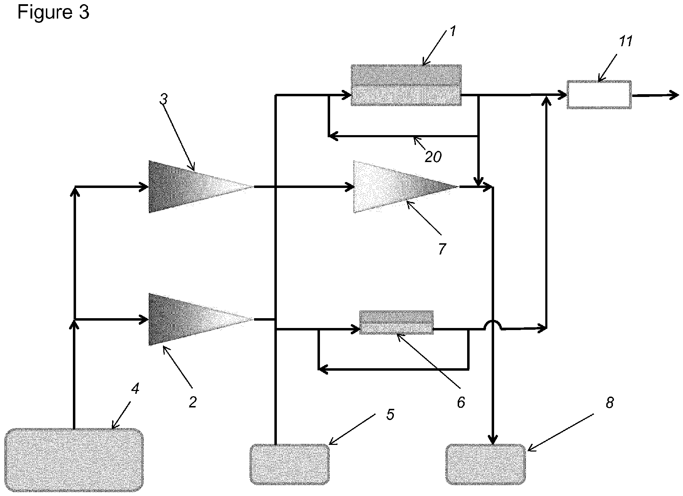

The system as shown in Figure 3 is similar to the one shown in Figure 2. Therefore, the system of Figure 3 operates in substantially the same way as the system of Figure 2 (and, therefore, also the system of Figure 1).

A hydrogen generator 7 and an additional buffer tank 8 have been added to the system of Figure 2 to form the system of Figure 3.

In the system of Figure 3, effluents comprising both ammonia and hydrogen are generated by the hydrogen generator 7 and the solid oxide fuel cell 1. In alternative embodiments, the ammonia and hydrogen buffer tank 8 can be fed only from the outlet of the solid oxide fuel cell 1 or by the hydrogen generator 7.

In the embodiment shown in Figure 3, the ammonia produced by the first fuel generator 2 and/or the second fuel generator 3 may be divided into two portions, where a first portion is sent to the solid oxide fuel cell 1 for use as fuel, and the second portion of the ammonia is directed by the controller to a hydrogen generator for at least partial decomposition into hydrogen. Therefore, in the system of Figure 3, some of the ammonia generated by the first fuel generator 2 and/or the second fuel generator 3 is converted to hydrogen as this produces a mixture that is easier to oxidize and so allows heat to be generated more readily.

In the system illustrated by Figure 3, the ammonia and hydrogen buffer tank 8 is positioned at a different location in the system to the other buffer tank 5 and the container 4 of the ammonia precursor. However, in alternative embodiments, the ammonia-hydrogen effluents buffer tank 8 may be placed inside the ammonia precursor tank 4 and/or inside the ammonia effluents buffer tank 5 for increased safety.

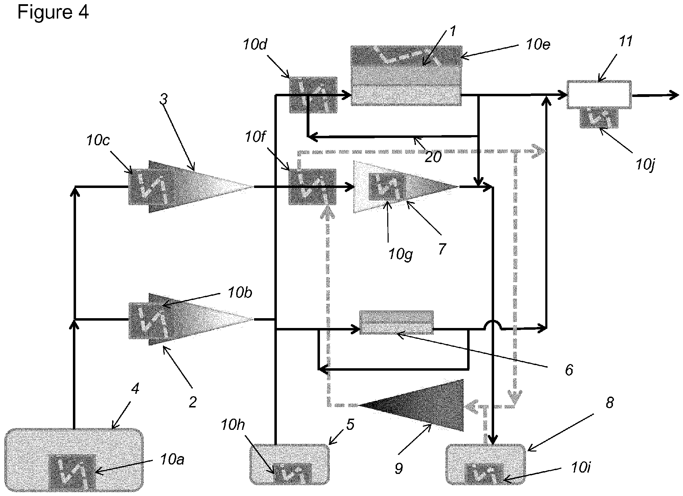

Figure 4 illustrates a further embodiment of a system which, like the system of Figure 3, generates ammonia-hydrogen effluents.

In the system of Figure 4, ammonia-hydrogen effluents produced by the system, for example, by the hydrogen generator 7 and the solid oxide fuel cell 1 can be burnt by an ammonia-hydrogen burner 9. In the system of Figure 4, the controller (not shown) is configured to direct the ammonia-hydrogen mixture stored in the ammonia-hydrogen effluents buffer tank 8 to the burner 9. Burning ammonia-hydrogen effluents generates heat that can be distributed to other parts of the system such as the solid oxide fuel cell 1, the first fuel generator 2, and/or the second fuel generator 3.

In order to harness the heat produced by the ammonia-hydrogen burner 9, the system of Figure 4 is provided with multiple heat exchangers 10a, 10b, 10c, 10d, 10e, 10f, 10g, 10h, 10i, 10j. These heat exchangers are able to transfer heat generated by the ammonia-hydrogen burner 9 to the part of the system to which the heat exchanger is attached. For example, the heat exchanger 10a joined to the solid oxide fuel cell 1 can be used to capture heat generated by the burner 9 and use it to heat up the solid oxide fuel cell 1. As another example, there can be a heat exchanger 10j attached to at least part of the exhaust system 11. For example, a heat exchanger 10j may be attached to a device (such as a SCR) provided in the exhaust system 11 for treating exhaust gases.

In the system of Figure 4, most of the system components are provided with a heat exchanger. However, in alternative embodiments, only one or a few of the system components may be provided with a heat exchanger.

In the system of Figure 4, air is fed to the burner 9 to insure proper combustion (the air supply is not illustrated in the figure). Furthermore, in this embodiment, at least a portion of the gases produced by the burner are directed back to the burner 9 so that they can be recycled and used to generate more heat.

At the start-up of the system shown in Figure 4, the system operates in a similar manner to the system of Figure 3 (and, therefore, the systems of Figures 1 and 2). However, as the system of Figure 4 comprises a ammonia-hydrogen burner 9, if there is any ammonia-hydrogen effluent stored in the ammonia-hydrogen buffer tank 8 on start-up of the system, this mixture can be combusted in the burner 9. The combustion of the ammonia-hydrogen effluent in the burner 9 generates heat. The heat generated by the burner 9 can be distributed to the solid oxide fuel cell 1 and/or other components of the system. Therefore, by burning an ammonia-hydrogen mixture on start-up, the demand on other energy generating mean (for example, on any batteries on board the vehicle) is reduced.

When the solid oxide fuel cell 1 and/or other system components (for example, the first and/or second fuel generator 2, 3) reaches its operating temperature, the burner 9 can be shutdown.

During operation of the system of Figure 4, the depleted ammonia-hydrogen effluents tank 8 is progressively refilled with gases produced by the solid oxide fuel cell 1 and/or the output of the hydrogen generator 7. Ammonia-hydrogen effluents will be sent to the relevant buffer tank 8 by the controller until the tank 8 is deemed to contain an appropriate level of effluents so as to insure optimal restart conditions.

In some embodiments, if the output from the solid oxide fuel cell 1 is deemed not sufficient to refill the ammonia-hydrogen buffer tank 8, the hydrogen generator 7 starts to produce ammonia-hydrogen effluents for storage in the buffer tank 8.

When the solid oxide fuel cell 1 is shut down, the system of Figure 4 follows a similar procedure to that of the system of Figure 1. However, in the system of Figure 4, both the second fuel generator 3 and the hydrogen generator 7 continue to operate as long as the solid oxide fuel cell 1 is producing enough heat to maintain the operating temperature of these devices, and provided the relevant buffer tank 5, 8 has space for more effluent. As with the system of Figure 1, when the second fuel generator 3 gets too cold, the controller shuts down this second fuel generator 3 and turns on the lower temperature first fuel generator 2. This first fuel generator 2 will then continue to operate for as long as the solid oxide fuel cell 1 is generating enough heat to allow the first fuel generator to generate ammonia, and whilst there is space for more ammonia in the ammonia buffer tank 5.

As with the systems illustrated in Figures 2 and 3, the system of Figure 4 also comprises a second fuel cell 6. After the solid oxide fuel cell 1 has been shut down, the second fuel cell 6 may use the waste heat generated by the solid oxide fuel cell 1 to generate electricity. This electricity can be used to recharge one or more electrical batteries provided on board the vehicle, for example.

## Claims

1. A vehicle system comprising:
• a fuel cell,
• at least one container for the storage of ammonia precursor, and
**characterized in that** it further comprises:
• a first and second fuel generator, wherein the first and second fuel generators are configured to convert the ammonia precursor into fuel for use in the fuel cell, and wherein the first fuel generator is configured to carry out the ammonia precursor conversion within a lower temperature range than the second fuel generator.

2. The vehicle system of Claim 1, wherein the ammonia precursor is urea.

3. The vehicle system of any of the preceding claims, wherein the first and second fuel generators convert the ammonia precursor into the same fuel, or wherein the first and second fuel generators convert the ammonia precursor into different types of fuel.

4. The vehicle system of Claim 3, wherein the first and second fuel generators are configured to convert the ammonia precursor into ammonia.

5. The vehicle system of any of the preceding claims, wherein the first fuel generator comprises a catalyst suitable for decomposing the ammonia precursor into ammonia, wherein the catalyst is preferably a biological catalyst, preferably urease.

6. The vehicle system of any of the preceding claims, wherein the second fuel generator comprises a catalyst suitable for decomposing the ammonia precursor into ammonia, wherein the catalyst is preferably vanadium pentoxide.

7. The vehicle system of any of the preceding claims further comprising at least one hydrogen generator, wherein the hydrogen generator is configured to at least partially decompose ammonia formed from the ammonia precursor into hydrogen.

8. The vehicle system of any of the preceding claims, wherein a single container for the storage of ammonia precursor is connected to both the first fuel generator and the second fuel generator.

9. The vehicle system of any of the preceding claims, wherein the fuel cell is a solid oxide fuel cell.

10. The vehicle system of any one of the claims 7 to 9, comprising an ammonia-hydrogen effluents buffer tank.

11. The vehicle system according to claim 10, wherein the ammonia-hydrogen effluents buffer tank is placed inside the ammonia precursor tank and/or inside the ammonia effluents buffer tank.

12. The vehicle system of any of the preceding claims, wherein at least one of the first fuel generator and the second fuel generator comprises a heat transfer means configured to transfer heat generated by the fuel cell to the fuel generator.

13. The vehicle system of any of the preceding claims further comprising at least one buffer tank for storing fuel produced by at least one of the first fuel generator and the second fuel generator.

14. The vehicle system of any of the preceding claims further comprising;
• a controller,
wherein the controller is configured to control the operation of at least one of the first fuel generator and the second fuel generator as a function of a temperature of the vehicle system.

15. The vehicle system of any of the preceding claims, wherein the system further comprises an additional fuel cell configured to generate electricity at a lower temperature than the fuel cell, and wherein the additional fuel cell is preferably an alkaline fuel cell.

## Patentansprüche

1. Fahrzeugsystem, aufweisend:
- eine Brennstoffzelle,
- mindestens einen Behälter für die Speicherung von einer Ammoniakvorstufe, und
**dadurch gekennzeichnet, dass** es ferner aufweist:
- einen ersten und einen zweiten Brennstoffgenerator, wobei der erste und der zweite Brennstoffgenerator dazu eingerichtet sind, die Ammoniakvorstufe in Brennstoff zur Verwendung in der Brennstoffzelle umzuwandeln, und wobei der erste Brennstoffgenerator dazu eingerichtet ist, die Umwandlung der Ammoniakvorstufe innerhalb eines niedrigeren Temperaturbereichs als der zweite Brennstoffgenerator durchzuführen.

2. Fahrzeugsystem nach Anspruch 1, wobei die Ammoniakvorstufe Harnstoff ist.

3. Fahrzeugsystem nach einem der vorhergehenden Ansprüche, wobei der erste und der zweite Brennstoffgenerator die Ammoniakvorstufe in den gleichen Brennstoff umwandeln, oder wobei der erste und der zweite Brennstoffgenerator die Ammoniakvorstufe in verschiedene Brennstoffarten umwandeln.

4. Fahrzeugsystem nach Anspruch 3, wobei der erste und der zweite Brennstoffgenerator dazu eingerichtet sind, die Ammoniakvorstufe in Ammoniak umzuwandeln.

5. Fahrzeugsystem nach einem der vorhergehenden Ansprüche, wobei der erste Brennstoffgenerator einen Katalysator aufweist, welcher für die Zersetzung der Ammoniakvorstufe in Ammoniak geeignet ist, wobei der Katalysator vorzugsweise ein biologischer Katalysator, vorzugsweise Urease, ist.

6. Fahrzeugsystem nach einem der vorgehenden Ansprüche, wobei der zweite Brennstoffgenerator einen Katalysator aufweist, welcher für die Zersetzung der Ammoniakvorstufe in Ammoniak geeignet ist, wobei der Katalysator vorzugsweise Vanadiumpentoxid ist.

7. Fahrzeugsystem nach einem der vorgehenden Ansprüche, ferner mindestens einen Wasserstoffgenerator aufweisend, wobei der Wasserstoffgenerator dazu eingerichtet ist, zumindest teilweise den aus der Ammoniakvorstufe erzeugten Ammoniak zu Wasserstoff zu zersetzen.

8. Fahrzeugsystem nach einem der vorhergehenden Ansprüche, wobei ein einzelner Behälter für die Speicherung der Ammoniakvorstufe sowohl an den ersten Brennstoffgenerator als auch an den zweiten Brennstoffgenerator angeschlossen ist.

9. Fahrzeugsystem nach einem der vorhergehenden Ansprüche, wobei die Brennstoffzelle eine Festoxidbrennstoffzelle ist.

10. Fahrzeugsystem nach einem der Ansprüche 7 bis 9, einen Ammoniak-Wasserstoff-Abfall-Speichertank aufweisend.

11. Fahrzeugsystem nach Anspruch 10, wobei der Ammoniak-Wasserstoff-Abfall-Speichertank innerhalb des Ammoniakvorstufentanks und/oder innerhalb des Ammoniak-Abfall-Speichertanks angeordnet ist.

12. Fahrzeugsystem nach einem der vorhergehenden Ansprüche, wobei mindestens einer aus dem ersten Brennstoffgenerator und dem zweiten Brennstoffgenerator eine Wärmeübertragungseinrichtung aufweist, welche dazu eingerichtet ist, die von der Brennstoffzelle erzeugte Wärme auf den Brennstoffgenerator zu übertragen.

13. Fahrzeugsystem nach einem der vorhergehenden Ansprüche, ferner mindestens einen Speichertank zur Speicherung von Brennstoff aufweisend, welcher von mindestens einem aus dem ersten Brennstoffgenerator und dem zweiten Brennstoffgenerator erzeugt wurde.

14. Fahrzeugsystem nach einem der vorhergehenden Ansprüche ferner aufweisend:
- eine Steuerung,
wobei die Steuerung dazu eingerichtet ist, den Betrieb von mindestens einem aus dem ersten Brennstoffgenerator und dem zweiten Brennstoffgenerator in Abhängigkeit von einer Temperatur des Fahrzeugsystems zu steuern.

15. Fahrzeugsystem nach einem der vorhergehenden Ansprüche, wobei das System ferner eine zusätzliche Brennstoffzelle aufweist, die dazu eingerichtet ist, Strom bei einer niedrigeren Temperatur als die Brennstoffzelle zu erzeugen, und wobei die zusätzliche Brennstoffzelle vorzugsweise eine alkalische Brennstoffzelle ist.

## Revendications

1. Un système de véhicule comprenant :
• une pile à combustible,
• au moins un récipient pour le stockage d'un précurseur d'ammoniac, et
**caractérisé en ce qu'**il comprend en outre :
• un premier et un deuxième générateurs de combustible, les premier et deuxième générateurs de combustible étant configurés pour convertir le précurseur d'ammoniac en combustible destiné à être utilisé dans la pile à combustible, et le premier générateur de combustible étant configuré pour effectuer la conversion du précurseur d'ammoniac dans une gamme de température inférieure à celle du deuxième générateur de combustible.

2. Le système de véhicule selon la revendication 1, dans lequel le précurseur d'ammoniac est de l'urée.

3. Le système de véhicule selon l'une quelconque des revendications précédentes, dans lequel les premier et deuxième générateurs de combustible convertissent le précurseur d'ammoniac en le même combustible, ou dans lequel les premier et deuxième générateurs de combustible convertissent le précurseur d'ammoniac en des types de combustible différents.

4. Le système de véhicule selon la revendication 3, dans lequel les premier et deuxième générateurs de combustible sont configurés pour convertir le précurseur d'ammoniac en de l'ammoniac.

5. Le système de véhicule selon l'une quelconque des revendications précédentes, dans lequel le premier générateur de combustible comprend un catalyseur approprié pour décomposer le précurseur d'ammoniac en de l'ammoniac, le catalyseur étant de préférence un catalyseur biologique, de préférence une uréase.

6. Le système de véhicule selon l'une quelconque des revendications précédentes, dans lequel le deuxième générateur de combustible comprend un catalyseur approprié pour décomposer le précurseur d'ammoniac en de l'ammoniac, le catalyseur étant de préférence du pentoxyde de vanadium.

7. Le système de véhicule selon l'une quelconque des revendications précédentes, comprenant en outre au moins un générateur d'hydrogène, le générateur d'hydrogène étant configuré pour décomposer en hydrogène, au moins partiellement, l'ammoniac formé à partir du précurseur d'ammoniac.

8. Le système de véhicule selon l'une quelconque des revendications précédentes, dans lequel un récipient unique pour le stockage d'un précurseur d'ammoniac est relié à la fois au premier générateur de combustible et au deuxième générateur de combustible.

9. Le système de véhicule selon l'une quelconque des revendications précédentes, dans lequel la pile à combustible est une pile à combustible à oxyde solide.

10. Le système de véhicule selon l'une quelconque des revendications 7 à 9, comprenant un réservoir tampon d'effluents d'ammoniac-hydrogène.

11. Le système de véhicule selon la revendication 10, dans lequel le réservoir tampon d'effluents d'ammoniac-hydrogène est placé à l'intérieur du réservoir de précurseur d'ammoniac et/ou à l'intérieur du réservoir tampon d'effluents d'ammoniac.

12. Le système de véhicule selon l'une quelconque des revendications précédentes, dans lequel au moins un parmi le premier générateur de combustible et le deuxième générateur de combustible comprend des moyens de transfert de chaleur configurés pour transférer la chaleur générée par la pile à combustible au générateur de combustible.

13. Le système de véhicule selon l'une quelconque des revendications précédentes, comprenant en outre au moins un réservoir tampon pour stocker le combustible produit par au moins l'un parmi le premier générateur de combustible et le deuxième générateur de combustible.

14. Le système de véhicule selon l'une quelconque des revendications précédentes, comprenant en outre :
• un contrôleur,
le contrôleur étant configuré pour commander le fonctionnement d'au moins l'un parmi le premier générateur de combustible et le deuxième générateur de combustible en fonction d'une température du système de véhicule.

15. Le système de véhicule selon l'une quelconque des revendications précédentes, dans lequel le système comprend en outre une pile à combustible supplémentaire configurée pour générer de l'électricité à une température inférieure à celle de la pile à combustible, et dans lequel la pile à combustible additionnelle est de préférence une pile à combustible alcaline.
